# EUROPEAN PATENT APPLICATION

(11) **EP 4 756 201 A1**
(43) Date of publication of application: **10.06.2026**
(21) Application number: 25221130.5
(22) Date of filing: 05.12.2025
(51) Int. Cl.: F02C 6/20, F02C 7/262, F02C 9/20, F02C 9/28, F02C 9/50

(54) **STARTING OPEN ROTOR PROPULSION SYSTEM DURING AIRCRAFT FLIGHT**

(30) Priority: 06.12.2024 US 202418972229
(71) Applicant: RTX Corporation, Farmington, CT 06032 (US)
(72) Inventor: SOBANSKI, Jon E., Glastonbury (US); BREAULT, Andrew E., Bolton (US); MORTON, Jeffrey T., Manchester (US)
(74) Representative: Dehns

(57) **Abstract**

A propulsion system (20) includes an open propulsor rotor (34), an open guide vane structure (36), a turbine engine (32) and a blade actuation system (48). The open propulsor rotor (34) includes a plurality of open propulsor blades (42). The turbine engine (32) includes a compressor section (65) and a rotating structure (86). The rotating structure (86) is operatively coupled to the open propulsor rotor (34). The rotating structure (86) includes a compressor rotor in the compressor section (65). The blade actuation system (48) is configured to adjust pitch of at least one of the open propulsor blades (42). A controller (110) is configured to control operation of the blade actuation system (48) during aircraft flight to tailor the pitch. The turbine engine (32) is configured to drive rotation of the open propulsor rotor (34) about the axis during a first mode of operation. The open propulsor rotor (34) is configured to windmill about the axis to drive rotation of the rotating structure (86) during a second mode of operation.

## Description

### BACKGROUND OF THE DISCLOSURE

### 1. Technical Field

This disclosure relates generally to an aircraft and, more particularly, to an open rotor propulsion system for the aircraft.

### 2. Background Information

Various types and configurations of aircraft propulsion systems are known in the art including those with one or more open propulsor rotors. Various systems are also known in the art for restarting a propulsion system during aircraft flight. While these known aircraft propulsion systems and restart systems have various benefits, there is still room in the art for improvement.

### SUMMARY OF THE DISCLOSURE

According to an aspect of the present disclosure, a propulsion system is provided for an aircraft. This propulsion system includes an open propulsor rotor, an open guide vane structure, a turbine engine, a blade actuation system and a controller. The open propulsor rotor includes a plurality of open propulsor blades. The open guide vane structure is next to the open propulsor rotor along an axis. The turbine engine includes a flowpath, a compressor section, a combustor section, a turbine section and a rotating structure. The flowpath extends through the compressor section, the combustor section and the turbine section from an inlet into the flowpath to an exhaust from the flowpath. The rotating structure is operatively coupled to the open propulsor rotor. The rotating structure includes a compressor rotor in the compressor section. The blade actuation system is configured to adjust pitch of at least one of the open propulsor blades. The controller is configured to control operation of the blade actuation system during aircraft flight to tailor the pitch of the at least one of the open propulsor blades for a first mode of operation and for a second mode of operation. The turbine engine is configured to drive rotation of the open propulsor rotor about the axis during the first mode of operation. The open propulsor rotor is configured to windmill about the axis to drive rotation of the rotating structure during the second mode of operation.

According to another aspect of the present disclosure, another propulsion system is provided for an aircraft. This propulsion system includes an open propulsor rotor, an open guide vane structure, a turbine engine, a vane actuation system and a controller. The open guide vane structure is next to the open propulsor rotor along an axis. The open guide vane structure includes a plurality of open guide vanes. The turbine engine includes a flowpath, a compressor section, a combustor section, a turbine section and a rotating structure. The flowpath extends through the compressor section, the combustor section and the turbine section from an inlet into the flowpath to an exhaust from the flowpath. The rotating structure is operatively coupled to the open propulsor rotor. The rotating structure includes a bladed rotor in the compressor section or in the turbine section. The vane actuation system is configured to adjust pitch of at least one of the open guide vanes. The controller is configured to control operation of the vane actuation system during aircraft flight to tailor the pitch of the at least one of the open guide vanes for a first mode of operation and for a second mode of operation. The turbine engine is configured to drive rotation of the open propulsor rotor about the axis during the first mode of operation. The open propulsor rotor is configured to windmill about the axis to drive rotation of the rotating structure during the second mode of operation.

According to still another aspect of the present disclosure, another propulsion system is provided for an aircraft. This propulsion system includes an open propulsor rotor, an airfoil array, a turbine engine, an actuation system and a controller. The open propulsor rotor includes a plurality of open propulsor blades. Each of the open propulsor blades projects into an environment external to the propulsion system. The airfoil array is downstream of the open propulsor rotor. The airfoil array includes a plurality of airfoils. Each of the airfoils projects into the environment external to the propulsion system. The turbine engine includes a flowpath, a compressor section, a combustor section, a turbine section and a rotating structure. The flowpath extends through the compressor section, the combustor section and the turbine section from an inlet into the flowpath to an exhaust from the flowpath. The rotating structure is operatively coupled to the open propulsor rotor. The rotating structure includes a compressor rotor in the compressor section and/or a turbine rotor in the turbine section. The actuation system is configured to adjust pitch of at least one of the open propulsor blades and/or at least one of the airfoils. The controller is configured to control operation of the actuation system during aircraft flight to set the pitch of the at least one of the open propulsor blades and/or the at least one of the airfoils for a first mode of operation and for a second mode of operation. The turbine engine is configured to drive rotation of the open propulsor rotor about an axis during the first mode of operation. The open propulsor rotor is configured to windmill about the axis to drive rotation of the rotating structure during the second mode of operation.

The propulsion system may also include a stationary guide vane structure, and the stationary guide vane structure may include the airfoil array.

The actuation system may be configured to adjust pitch of the at least one of the airfoils.

The controller may be configured to control the operation of the vane actuation system to tailor the pitch of the at least one of the open guide vanes during the second mode of operation based on an air temperature outside of the propulsion system and/or an air pressure outside of the propulsion system.

The controller may be configured to control the operation of the vane actuation system to tailor the pitch of the at least one of the open guide vanes during the second mode of operation based on an aircraft airspeed and/or an aircraft altitude.

The controller may be configured to control the operation of the vane actuation system to tailor the pitch of the at least one of the open guide vanes during the second mode of operation based on a temperature in the turbine engine, a pressure in the turbine engine and/or a rotational speed of the rotating structure.

The bladed rotor may be a compressor rotor in the compressor section.

The propulsion system may also include a sensor configured to provide sensor data to the controller. The sensor data may be indicative of an environmental parameter. The controller may be configured to control the operation of the blade actuation system to tailor the pitch of the at least one of the open propulsor blades during the second mode of operation based on at least the environmental parameter.

The propulsion system may also include a sensor configured to provide sensor data to the controller. The sensor data may be indicative of an aircraft flight parameter. The controller may be configured to control the operation of the blade actuation system to tailor the pitch of the at least one of the open propulsor blades during the second mode of operation based on at least the aircraft flight parameter.

The propulsion system may also include a sensor configured to provide sensor data to the controller. The sensor data may be indicative of an operational parameter of the turbine engine. The controller may be configured to control the operation of the blade actuation system to tailor the pitch of the at least one of the open propulsor blades during the second mode of operation based on at least the operational parameter of the turbine engine.

The controller may be configured to initiate a startup sequence for the turbine engine after the pitch of the at least one of the open propulsor blades is tailored by the blade actuation system during the second mode of operation.

The propulsion system may also include a vane actuation system configured to adjust pitch of at least one of a plurality of open guide vanes. The open guide vane structure may include the plurality of open guide vanes. The controller may also be configured to control operation of the vane actuation system during the aircraft flight to tailor the pitch of the at least one of the open guide vanes for the first mode of operation and for the second mode of operation.

The propulsion system may also include a sensor configured to provide sensor data to the controller. The sensor data may be indicative of an environmental parameter. The controller may be configured to control the operation of the vane actuation system to tailor the pitch of the at least one of the open guide vanes during the second mode of operation based on at least the environmental parameter.

The propulsion system may also include a sensor configured to provide sensor data to the controller. The sensor data may be indicative of an aircraft flight parameter. The controller may be configured to control the operation of the vane actuation system to tailor the pitch of the at least one of the open guide vanes during the second mode of operation based on at least the aircraft flight parameter.

The propulsion system may also include a sensor configured to provide sensor data to the controller. The sensor data may be indicative of an operational parameter of the turbine engine. The controller may be configured to control the operation of the vane actuation system to tailor the pitch of the at least one of the open guide vanes during the second mode of operation based on at least the operational parameter.

The open guide vane structure may be downstream of the open propulsor rotor.

The open propulsor rotor may be located axially between a forward end of the propulsion system and the turbine engine.

The rotating structure may also include a turbine rotor in the turbine section.

The inlet into the flowpath may be downstream of the open propulsor rotor. The open propulsor rotor may be configured to propel air into the inlet into the flowpath during the first mode of operation.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic sectional illustration of an aircraft propulsion system.
FIG. 2 is a partial schematic sectional illustration of the aircraft propulsion system at a propulsion section.
FIG. 3 is a partial schematic illustration of the aircraft propulsion system with a control system.

### DETAILED DESCRIPTION

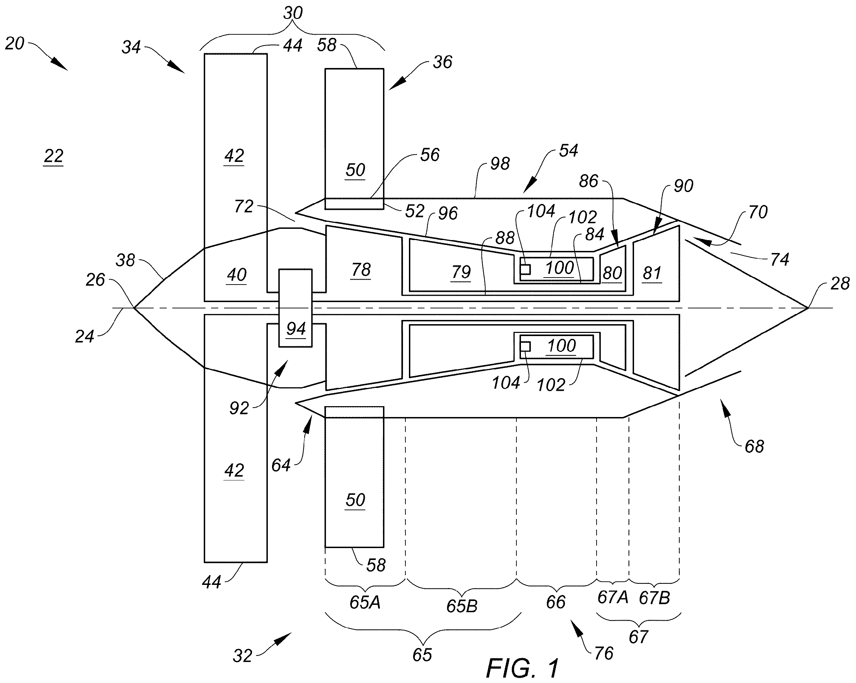

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 and a gas turbine engine 32.

The propulsion section 30 of FIG. 1 includes an open propulsor rotor 34 and an open guide vane structure 36. These propulsion section members 34 and 36 are un-ducted and unshrouded components of the aircraft propulsion system 20 and its propulsion section 30. In an alternate embodiment, the open guide vane structure 36 may be shrouded. In such an embodiment, the open guide vane structure 36 may include a shroud at a distal tip 58 that extends, un-ducted, into the environment 22. The propulsion section 30 of FIG. 1 also includes a nose cone 38 disposed at (e.g., on, adjacent or proximate) the propulsion system forward end 26. Briefly, this nose cone 38 may be configured as a spinner which is rotatable with the propulsor rotor 34 about the propulsion system axis 24. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 24 in an array; e.g., a circular array. Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 24) out from an exterior surface of the rotor base 40, into the external environment 22, to an unshrouded distal tip 44 of the respective propulsor blade 42. Each propulsor blade 42 is thereby configured as an un-ducted and unshrouded propulsor blade which is exposed to (e.g., disposed in) the surrounding external environment 22.

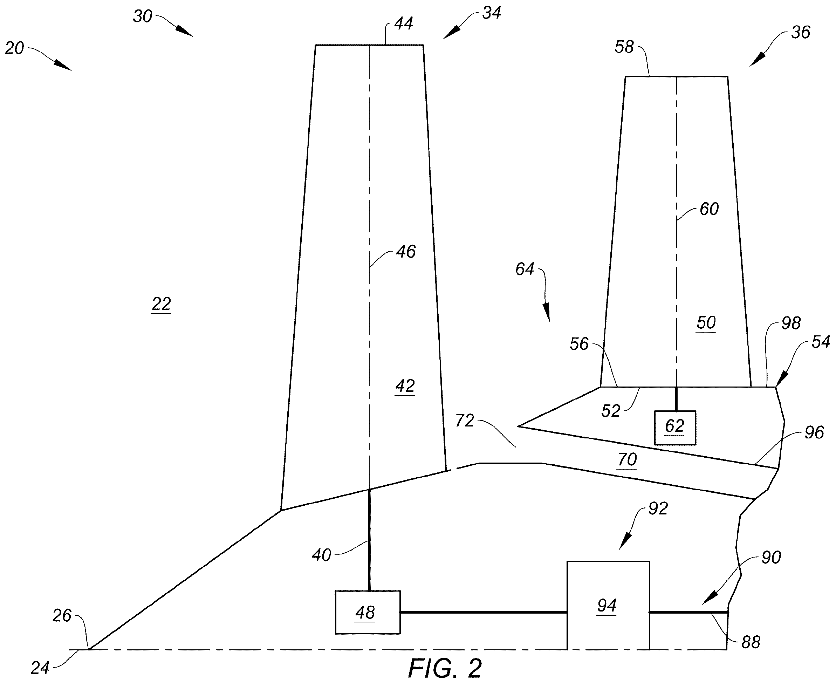

Referring to FIG. 2, each propulsor blade 42 may be configured to pivot about a respective blade pivot axis 46. This blade pivot axis 46 extends radially relative to the propulsion system axis 24. The blade pivot axis 46 of FIG. 2, for example, is arranged perpendicular to the propulsion system axis 24 when viewed, for example, in a longitudinal reference plane parallel to (e.g., including) the propulsion system axis 24; e.g., the plane of FIG. 2. Each propulsor blade 42 of FIG. 2 is operatively coupled with a blade actuation system 48. This blade actuation system 48 is configured to pivot each propulsor blade 42 about its own respective blade pivot axis 46. By pivoting each propulsor blade 42 about its blade pivot axis 46, a pitch of the respective propulsor blade 42 may be changed. Note, while the blade pivot axis 46 is shown in FIG. 2 as being perpendicular to the propulsion system axis 24, it is contemplated this blade pivot axis 46 may or may not be coincident with the propulsion system axis 24. Moreover, it is contemplated each blade pivot axis 46 may alternatively be angularly offset from the propulsion system axis 24 by an acute angle or an obtuse angle when viewed, for example, in the longitudinal reference plane. Of course, it is contemplated some or all of the propulsor blades 42 may be alternatively moved to change the propulsor blade pitch. Moreover, it is contemplated some or all of the propulsor blades 42 may alternatively be fixed pitch propulsor blades in other embodiments.

The guide vane structure 36 of FIG. 1 includes a plurality of open exit guide vanes 50 (e.g., airfoils) that are arranged and may be equispaced circumferentially about the propulsion system axis 24 in an array; e.g., a circular array. This guide vane structure 36 and its guide vanes 50 are arranged axially next to (e.g., adjacent) the propulsor rotor 34 and its propulsor blades 42. The guide vane structure 36 and its guide vanes 50 of FIG. 1, for example, are arranged downstream of the propulsor rotor 34 and its propulsor blades 42, without (e.g., any) other elements axially therebetween to obstruct, turn and/or otherwise influence the air propelled by the propulsor rotor 34 to the guide vane structure 36 for example. Each of the guide vanes 50 of FIG. 1 is coupled to a support structure 52 of a stationary housing structure 54 for the aircraft propulsion system 20. This support structure 52 may be configured as or otherwise include a support frame, a case and/or another fixed structure of the housing structure 54. Each of the guide vanes 50 projects spanwise along a span line of the respective guide vane 50 (e.g., radially relative to the propulsion system axis 24) out from an exterior surface 56 of the housing structure 54, into the external environment 22, to the distal tip 58 of the respective guide vane 50. Here, the exterior surface 56 radially borders the external environment 22 and forms an exterior aerodynamic flow surface of the aircraft propulsion system 20. Each guide vane 50 is thereby configured as an un-ducted and unshrouded guide vane which is exposed to (e.g., disposed in) the surrounding external environment 22. Though illustrated as an unshrouded guide vane 50 in FIG. 2, this is not intended to be so limiting, and the guide vane 50 may, in alternate embodiments, be configured with a shroud at the distal tip 58.

Referring to FIG. 2, each guide vane 50 may be configured to pivot about a respective vane pivot axis 60. This vane pivot axis 60 extends radially relative to the propulsion system axis 24. The vane pivot axis 60 of FIG. 2, for example, is arranged perpendicular to the propulsion system axis 24 when viewed, for example, in the longitudinal reference plane. Each guide vane 50 of FIG. 2 is operatively coupled with a vane actuation system 62, which vane actuation system 62 may be discrete from or integrated as part of the blade actuation system 48. The vane actuation system 62 is configured to pivot each guide vane 50 about its own respective vane pivot axis 60. By pivoting each guide vane 50 about its vane pivot axis 60, a pitch of the respective guide vane 50 may be changed. Note, while the vane pivot axis 60 is shown in FIG. 2 as being perpendicular to the propulsion system axis 24, it is contemplated this vane pivot axis 60 may or may not be coincident with the propulsion system axis 24. Moreover, it is contemplated each vane pivot axis 60 may alternatively be angularly offset from the propulsion system axis 24 by an acute angle or an obtuse angle when viewed, for example, in the longitudinal reference plane. Of course, it is contemplated some or all of the guide vanes 50 may be alternatively moved to change the guide vane pitch. Moreover, it is contemplated some or all of the guide vanes 50 may alternatively be fixed pitch guide vanes in other embodiments.

Referring to FIG. 1, the turbine engine 32 includes an inlet section 64, a compressor section 65, a combustor section 66, a turbine section 67 and an exhaust section 68. The compressor section 65 of FIG. 1 includes a low pressure compressor (LPC) section 65A and a high pressure compressor (HPC) section 65B. The turbine section 67 of FIG. 1 includes a high pressure turbine (HPT) section 67A and a low pressure turbine (LPT) section 67B. The turbine engine 32 also includes an (e.g., annular) engine flowpath 70 which extends longitudinally through the aircraft propulsion system 20 of FIG. 1 and its turbine engine 32 from an (e.g., annular) airflow inlet 72 into the engine flowpath 70 to a (e.g., annular) combustion products exhaust 74 from the engine flowpath 70. The flowpath inlet 72 is also an airflow inlet into the aircraft propulsion system 20 of FIG. 1 and its turbine engine 32. The flowpath exhaust 74 is also a combustion products exhaust from the aircraft propulsion system 20 of FIG. 1 and its turbine engine 32. At least (or only) the LPC section 65A, the HPC section 65B, the combustor section 66, the HPT section 67A and the LPT section 67B collectively form a core 76 (e.g., a gas generator) of the turbine engine 32.

Each of the engine sections 65A, 65B, 67A and 67B includes a respective bladed rotor 78-81; e.g., a ducted and/or shrouded engine rotor. Each of these engine rotors 78-81 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 70. Each of the rotor blades is connected to the respective rotor base. Each of the rotor blades projects radially (e.g., spanwise) out from the respective rotor base into the engine flowpath 70 and to a distal tip of the respective rotor blade.

The HPC rotor 79 is coupled to and rotatable with the HPT rotor 80. The HPC rotor 79 of FIG. 1, for example, is connected to the HPT rotor 80 by a high speed shaft 84. At least (or only) the HPC rotor 79, the HPT rotor 80 and the high speed shaft 84 collectively form a high speed rotating structure 86; e.g., a high speed spool of the engine core 76. This high speed rotating structure 86 of FIG. 1 and its members 79, 80 and 84 are rotatable about the propulsion system axis 24. However, in other embodiments, the high speed rotating structure 86 and its members 79, 80 and 84 may alternatively be rotatable about another rotational axis which is (e.g., laterally and/or angularly) offset from the rotational axis of the propulsor rotor 34.

The LPC rotor 78 is coupled to and rotatable with the LPT rotor 81. The LPC rotor 78 of FIG. 1, for example, is connected to the LPT rotor 81 by a low speed shaft 88. At least (or only) the LPC rotor 78, the LPT rotor 81 and the low speed shaft 88 collectively form a low speed rotating structure 90; e.g., a low speed spool of the engine core 76. This low speed rotating structure 90 of FIG. 1 and its members 78, 81 and 88 are rotatable about the propulsion system axis 24. However, in other embodiments, the low speed rotating structure 90 and its members 78, 81 and 88 may alternatively be rotatable about another rotational axis which is (e.g., laterally and/or angularly) offset from the rotational axis of the propulsor rotor 34.

The low speed rotating structure 90 is coupled to the propulsor rotor 34 through a drivetrain 92. This drivetrain 92 may be configured as a geared drivetrain, where a geartrain 94 (e.g., a transmission, a speed change device, an epicyclic geartrain, etc.) is disposed between and operatively couples the propulsor rotor 34 to the low speed rotating structure 90 and its LPC rotor 78 and its LPT rotor 81. With this arrangement, the propulsor rotor 34 may rotate at a different (e.g., slower) rotational speed than the low speed rotating structure 90 and its LPC rotor 78 and its LPT rotor 81. Here, the propulsor rotor 34 and the low speed rotating structure 90 may rotate in a common (the same) direction about the propulsion system axis 24 or in opposite directions about the propulsion system axis 24 depending, for example, upon the specific configuration of the geartrain 94. Alternatively, the drivetrain 92 may be configured as a direct-drive drivetrain, where the geartrain 94 is omitted. With such an arrangement, the propulsor rotor 34 rotates at a common (the same) rotational speed as the low speed rotating structure 90 and its LPC rotor 78 and its LPT rotor 81.

The engine sections 64-68 may be arranged sequentially along the propulsion system axis 24 and are housed within and/or formed by the housing structure 54. This housing structure 54 includes an engine case 96 (e.g., a gas generator case) and a nacelle 98. The engine case 96 houses one or more of the engine sections 65A-67B; e.g., the engine core 76. The engine case 96 of FIG. 1, for example, extends axially along (e.g., axially overlaps) and extends circumferentially about (e.g., circumscribes) the engine sections 65A-67B and their respective bladed rotors 78-81. The engine case 96 may also house the geartrain 94. The nacelle 98 houses and provides an aerodynamic cover over the engine case 96. An exterior wall of the nacelle 98 of FIG. 1, for example, is disposed radially outboard of, extends axially along (e.g., axially overlaps) and extends circumferentially about (e.g., circumscribes) the engine core 76 and its engine case 96. This nacelle wall may at least partially or completely form the exterior surface 56. With the foregoing arrangement, the bladed rotors 78-81 are disposed within the housing structure 54. By contrast, the propulsor rotor 34 and the guide vane structure 36 are disposed at least partially (or completely) outside of the housing structure 54.

During operation of the aircraft propulsion system 20 of FIG. 1, ambient air within the external environment 22 is propelled by the rotating propulsor rotor 34 in the downstream, aft direction towards the propulsion system aft end 28. A major portion (e.g., more than 50%) of this air bypasses the turbine engine 32 to provide forward thrust while a minor portion (e.g., less than 50%) of the air flows into the turbine engine 32. For example, an outer stream of the air propelled by the rotating propulsor rotor 34 flows axially across the guide vane structure 36 and outside of the housing structure 54 and its exterior surface 56; e.g., along an exterior of the nacelle 98. The guide vane structure 36 conditions (e.g., straightens out, de-swirls, etc.) the outer stream of air within the external environment 22 to enhance the forward thrust. By contrast, an inner stream of the air propelled by the rotating propulsor rotor 34 may bypass the guide vane structure 36 and enter the turbine engine 32 and its engine flowpath 70 through the flowpath inlet 72. The air entering the engine flowpath 70 through the flowpath inlet 72 may be referred to as "core air".

The core air is compressed by the LPC rotor 78 and the HPC rotor 79 and directed into a combustion chamber 100 (e.g., an annular combustion chamber) of a combustor 102 (e.g., an annular combustor) in the combustor section 66. Fuel is injected into the combustion chamber 100 by one or more fuel injectors 104 and mixed with the compressed core air to provide a fuel-air mixture. This fuel-air mixture is ignited and combustion products thereof flow through and sequentially drive rotation of the HPT rotor 80 and the LPT rotor 81. The rotation of the HPT rotor 80 and the LPT rotor 81 respectively drive rotation of the HPC rotor 79 and the LPC rotor 78 and, thus, compression of the core air. The rotation of the LPT rotor 81 also drives the rotation of the propulsor rotor 34 through the drivetrain 92 and/or geartrain 94. The turbine engine 32 and its low speed rotating structure 90 thereby power operation of (e.g., drive rotation of) the propulsor rotor 34 during aircraft propulsion system operation.

The engine flowpath 70 of FIG. 1 extends longitudinally from the flowpath inlet 72, sequentially through the inlet section 64, the LPC section 65A, the HPC section 65B, the combustor section 66, the HPT section 67A, the LPT section 67B and the exhaust section 68, to the flowpath exhaust 74. The engine flowpath 70 of FIG. 1 is configured such that the core air and the combustion products generally flow in the aft, downstream direction towards the propulsion system aft end 28. The core air and the combustion products thereby flow along with the ambient air propelled by the rotating propulsor rotor 34 in a common axial direction - the downstream, aft direction. The turbine engine 32 of the present disclosure, however, is not limited to such an exemplary common flow engine arrangement. For example, the engine flowpath 70 may alternatively be configured such that the core air and the combustion products generally flow in a forward, upstream direction towards the propulsion system forward end 26. The core air and the combustion products may thereby flow in an opposite direction as the ambient air propelled by the rotating propulsor rotor 34. Here, the turbine engine 32 may have a reverse flow engine arrangement.

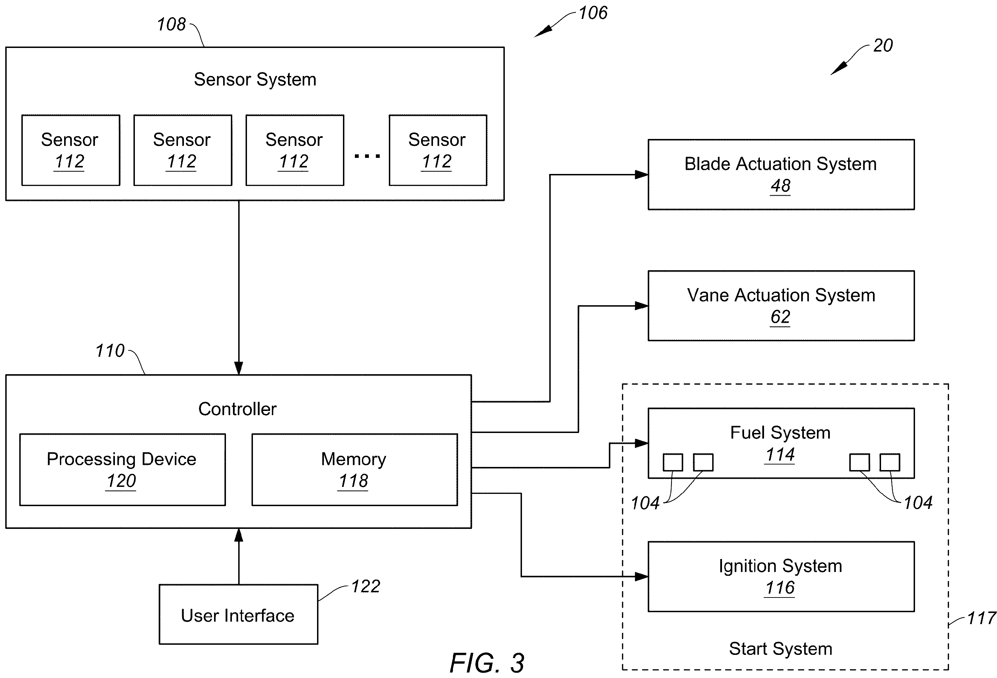

Referring to FIG. 3, the aircraft propulsion system 20 is provided with a control system 106. This control system 106 is configured to control the operation of the aircraft propulsion system 20. The control system 106 of FIG. 3, for example, includes a sensor system 108 and a controller 110.

The sensor system 108 is configured to measure and/or otherwise determine information associated with various parameters for the aircraft and its aircraft propulsion system 20 of FIG. 1. These parameters include, but are not limited to, one or more environmental parameters, one or more aircraft flight parameters and/or one or more operational parameters for the turbine engine 32. Each environmental parameter is indicative of a characteristic of the environment 22 external to the aircraft propulsion system 20. Examples of these environmental parameters include, but are not limited to, a temperature of free-stream air in the external environment 22, a temperature of propulsor air (e.g., air propelled by the propulsor rotor 34) in the external environment 22, a pressure of the free-stream air in the external environment 22, and a pressure of the propulsor air in the external environment 22. Each aircraft flight parameter is indicative of a characteristic of the aircraft during aircraft flight. Examples of these aircraft flight parameters include, but are not limited to, an airspeed of the aircraft during aircraft flight, a rate of change in the airspeed (e.g., acceleration or deceleration) of the aircraft during aircraft flight, an altitude of the aircraft during aircraft flight, a rate of change in the altitude (climbing or descending) of the aircraft during aircraft flight, a pitch of the aircraft during aircraft flight, and a rate of change in the pitch of the aircraft during aircraft flight. Each engine operational parameter is indicative of a characteristic of the turbine engine 32. Examples of the engine operational parameters include, but are not limited to, a temperature of gas (e.g., the core air, the combustion products, etc.) flowing within the turbine engine 32 (e.g., through the engine flowpath 70), a pressure of gas (e.g., the core air, the combustion products, etc.) flowing within the turbine engine 32 (e.g., through the engine flowpath 70), a rotational speed of the low speed rotating structure 90 and its members 78, 81 and 88, a rotational speed of the high speed rotating structure 86 and its members 79, 80 and 84, and a rotational speed of the propulsor rotor 34.

The sensor system 108 includes one or more sensors 112; e.g., measurement probes. Each of these sensors 112 is configured to measure and/or otherwise determine information associated with a respective single one of the foregoing parameters, or multiple of the foregoing parameters. Each of the sensors 112 is also configured to output sensor data indicative of the respective parameter(s). One or more of the sensors 112 may be arranged internal to the aircraft propulsion system 20. Such internal sensors may be used to measure and/or otherwise determine information associated with the engine operational parameter(s). One or more of the sensors 112 may be arranged external to the aircraft propulsion system 20. These external sensors may be mounted to an exterior of the aircraft propulsion system 20, to an exterior of an airframe of the aircraft, and/or internally within the aircraft airframe. Such external sensors may be used to measure and/or otherwise determine information associated with the environmental parameter(s) and/or the aircraft flight parameter(s). Examples of the sensors 112 include, but are not limited to, pressure sensor(s), temperature sensor(s), airspeed sensor(s), altimeter(s), rotational speed sensor(s), position sensor(s) (e.g., angle of attack sensor, gyroscopes, location sensors (e.g., GPS, inertial navigation systems, etc.), and flow sensor(s).

The controller 110 of FIG. 3 is in signal communication (e.g., hardwired and/or wirelessly coupled) with the sensor system 108 and, more particularly, each of the sensors 112. The controller 110 is also in signal communication with one or more components of the aircraft propulsion system 20 which facilitate operational control of the aircraft propulsion system 20. The controller 110 of FIG. 3, for example, is in signal communication with the blade actuation system 48 and/or the vane actuation system 62. This controller 110 may also be in signal communication with a fuel system 114 (e.g., a fuel delivery system) for the turbine engine 32 and/or an ignition system 116 for the turbine engine 32. Briefly, the fuel system 114 is configured to deliver the fuel to the fuel injectors 104 of FIG. 1 for injection into the combustion chamber 100. The ignition system 116 is configured to ignite the fuel-air mixture (at least during engine startup and/or engine restart). Here, the fuel system 114 and the ignition system 116 are incorporated into or otherwise in communication with a starting system 117 for the turbine engine 32. This start system 117 may be configured to control the startup and/or shut down of the propulsion system 20 and/or its engine core 76.

The controller 110 of FIG. 3 may be configured as an onboard engine controller for the aircraft propulsion system 20 and its turbine engine 32 of FIG. 1; e.g., an electronic engine controller (EEC), an electronic control unit (ECU), a full-authority digital engine controller (FADEC), etc. The controller 110 may be implemented with a combination of hardware and software. The hardware may include memory 118 and at least one processing device 120, which processing device 120 may include one or more single-core and/or multi-core processors. The hardware may also or alternatively include analog and/or digital circuitry other than that described above.

The memory 118 is configured to store software (e.g., program instructions) for execution by the processing device 120, which software execution may control and/or facilitate performance of one or more operations such as those described herein. The memory 118 may be a non-transitory computer readable medium. For example, the memory 118 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

Referring generally to FIGS. 1-3, the control system 106 may facilitate operation of the aircraft propulsion system 20 in various modes of operation. These modes of operation include, but are not limited to, an engine powered mode of operation and a free-stream powered mode of operation. The aircraft propulsion system 20 may operate in both the engine powered operating mode and the free-stream power operating mode during aircraft flight. The aircraft propulsion system 20 may also operate in the engine powered operating mode while the aircraft is taxiing on ground, accelerating down a runway for takeoff, and/or decelerating down the runway for landing.

During the engine powered operating mode, the control system 106 signals various propulsion system components to facilitate aircraft propulsion system operation as described above. The controller 110, for example, may signal the fuel system 114 to deliver the fuel to the combustor 102 for combustion. The turbine engine 32 and its low speed rotating structure 90, in turn, may drive rotation of the propulsor rotor 34 to generate the forward aircraft thrust. The controller 110 may signal the blade actuation system 48 to adjust the pitch of the propulsor blade(s) 42. The controller 110 may also signal the vane actuation system 62 to adjust the pitch of the guide vane(s) 50.

During the engine powered operating mode, the controller 110 may tailor the propulsor blade pitch and/or the guide vane pitch to adjust (e.g., increase) propulsion system efficiency, to adjust (e.g., increase or decrease) propulsion system thrust, to adjust (e.g., decrease) propulsion section sound generation, and/or the like. For example, the controller 110 may (a) signal the blade actuation system 48 to set the propulsor blade pitch to a new value (or maintain a current value) and/or (b) signal the vane actuation system 62 to set the guide vane pitch to a new value (or maintain a current value) in response to receiving new command data (e.g., a thrust command, a throttle command, etc.) from a user interface 122 such as a pilot control. The controller 110 may also or alternatively (a) signal the blade actuation system 48 to set the propulsor blade pitch to a new value (or maintain a current value) and/or (b) signal the vane actuation system 62 to set the guide vane pitch to a new value (or maintain a current value) in response to receiving updated sensor data from the sensor(s) 112. In other words, the controller 110 may tailor the propulsor blade pitch and/or the guide vane pitch based on (e.g., to account for) current and/or changing environmental parameter(s), engine operational parameter(s) and/or aircraft flight parameter(s).

In an unlikely event of a combustor flameout during aircraft flight, the control system 106 may signal various propulsion system components to facilitate aircraft propulsion system operation in the free-stream powered operating mode. For example, the controller 110 may (a) signal the blade actuation system 48 to adjust and/or set the propulsor blade pitch and/or (b) signal the vane actuation system 62 to adjust and/or set the guide vane pitch to facilitate (e.g., optimized) windmilling of the propulsor rotor 34. This windmilling of the propulsor rotor 34 may be used to drive rotation of the low speed rotating structure 90 through the drivetrain 92. By rotating the low speed rotating structure 90, the LPC rotor 78 compresses the core air and provide this pressurized core air to the combustor 102 to facilitate re-lighting of the combustor 102. More particularly, at higher altitudes, ambient air is relatively thin; e.g., the ambient air has a relatively low density. Thus, by compressing the ambient air with the LPC rotor 78, the combustor 102 may receive denser core air which may be closer to that received by the combustor 102 during normal operation and/or normal engine startup.

During the free-stream powered operating mode, the controller 110 may tailor the propulsor blade pitch and/or the guide vane pitch to adjust (e.g., increase) propulsor rotor windmilling power, to adjust (e.g., decrease) propulsion section drag (e.g., drag of the guide vanes 50), to adjust (e.g., decrease) bow wake effects of the guide vane structure 36 on the windmilling propulsor rotor 34, to adjust (e.g., decrease) high cycle fatigue (HCF) on the guide vane structure 36 and its guide vanes 50, and/or the like. This tailoring of the propulsor blade pitch and/or the guide vane pitch may be based on (e.g., to account for) current and/or changing environmental parameter(s), engine operational parameter(s) and/or aircraft flight parameter(s). The tailoring of the propulsor blade pitch and/or the guide vane pitch may also be based on manual input command data from the user interface 122. The controller 110 may then signal the start system, the fuel system 114 and/or the ignition system 116 to start (or continue) a startup sequence in order to relight combustion and restart the turbine engine 32 during aircraft flight.

The propulsion section 30 of FIG. 1 is described above with a tractor configuration; e.g., where the propulsor rotor 34 is disposed at or otherwise near the propulsion system forward end 26. It is contemplated, however, the propulsion section 30 may alternatively be disposed at or otherwise near the propulsion system aft end 28 to provide a pusher fan configuration. Moreover, while the turbine engine 32 is described above with a particular two rotating structure arrangement, the present disclosure is not limited thereto. For example, the LPC rotor 78 may be omitted to configure the LPT rotor 81 as a power turbine (PT) rotor for the propulsor rotor 34. In another example, the turbine engine 32 may also include another rotating structure; e.g., an intermediate speed spool for the engine core 76.

The guide vane structure 36 is described above as a fixed (e.g., non-rotatable) guide vane structure. It is contemplated, however, the guide vane structure 36 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 24); and (B) a single open rotor and swirl recovery vane (SRV) propulsion system during a single rotor mode of operation (e.g., when the propulsor rotor 34 is rotating and the structure 36 is rotationally fixed about the propulsion system axis 24). Note, when the guide vane structure 36 is configured to selectively rotate about the propulsion system axis 24, the moving guide vanes 50 operate as propulsor blades.

The aircraft propulsion system 20 is described above as including the propulsor rotor 34 paired with the guide vane structure 36. The present disclosure, however, is not limited to such an exemplary propulsion system configuration. For example, it is contemplated the aircraft propulsion system 20 may be configured as a single rotor (SR) open rotor propulsion system without the guide vane structure 36. In another example, it is contemplated the aircraft propulsion system 20 may be configured as a counter-rotating open rotor (CROR) propulsion system where the guide vane structure 36 is replaced by another open propulsor rotor which may also be powered by the low speed rotating structure 90 or otherwise. In such embodiments, propulsor blade pitch of one or both of the counter-rotating propulsor rotors may be adjusted as described above to facilitate windmilling.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A propulsion system for an aircraft, comprising:
an open propulsor rotor comprising a plurality of open propulsor blades;
an open guide vane structure next to the open propulsor rotor along an axis;
a turbine engine including a flowpath, a compressor section, a combustor section, a turbine section and a rotating structure, the flowpath extending through the compressor section, the combustor section and the turbine section from an inlet into the flowpath to an exhaust from the flowpath, the rotating structure operatively coupled to the open propulsor rotor, and the rotating structure comprising a compressor rotor in the compressor section;
a blade actuation system configured to adjust pitch of at least one of the plurality of open propulsor blades; and
a controller configured to control operation of the blade actuation system during aircraft flight to tailor the pitch of the at least one of the plurality of open propulsor blades for a first mode of operation and for a second mode of operation, wherein the turbine engine is configured to drive rotation of the open propulsor rotor about the axis during the first mode of operation, and wherein the open propulsor rotor is configured to windmill about the axis to drive rotation of the rotating structure during the second mode of operation.

2. The propulsion system of claim 1, further comprising:
a sensor configured to provide sensor data to the controller, the sensor data indicative of an environmental parameter;
the controller configured to control the operation of the blade actuation system to tailor the pitch of the at least one of the plurality of open propulsor blades during the second mode of operation based on at least the environmental parameter.

3. The propulsion system of claim 1 or 2, further comprising:
a sensor configured to provide sensor data to the controller, the sensor data indicative of an aircraft flight parameter;
the controller configured to control the operation of the blade actuation system to tailor the pitch of the at least one of the plurality of open propulsor blades during the second mode of operation based on at least the aircraft flight parameter.

4. The propulsion system of claim 1, 2 or 3, further comprising:
a sensor configured to provide sensor data to the controller, the sensor data indicative of an operational parameter of the turbine engine;
the controller configured to control the operation of the blade actuation system to tailor the pitch of the at least one of the plurality of open propulsor blades during the second mode of operation based on at least the operational parameter of the turbine engine.

5. The propulsion system of any preceding claim, wherein the controller is configured to initiate a startup sequence for the turbine engine after the pitch of the at least one of the plurality of open propulsor blades is tailored by the blade actuation system during the second mode of operation.

6. The propulsion system of any preceding claim, further comprising:
a vane actuation system configured to adjust pitch of at least one of a plurality of open guide vanes;
the open guide vane structure comprising the plurality of open guide vanes; and
the controller further configured to control operation of the vane actuation system during the aircraft flight to tailor the pitch of the at least one of the plurality of open guide vanes for the first mode of operation and for the second mode of operation.

7. The propulsion system of claim 6, further comprising:
a sensor configured to provide sensor data to the controller, the sensor data indicative of an environmental parameter;
the controller configured to control the operation of the vane actuation system to tailor the pitch of the at least one of the plurality of open guide vanes during the second mode of operation based on at least the environmental parameter.

8. The propulsion system of claim 6 or 7, further comprising:
a sensor configured to provide sensor data to the controller, the sensor data indicative of an aircraft flight parameter;
the controller configured to control the operation of the vane actuation system to tailor the pitch of the at least one of the plurality of open guide vanes during the second mode of operation based on at least the aircraft flight parameter.

9. The propulsion system of claim 6, 7 or 8, further comprising:
a sensor configured to provide sensor data to the controller, the sensor data indicative of an operational parameter of the turbine engine;
the controller configured to control the operation of the vane actuation system to tailor the pitch of the at least one of the plurality of open guide vanes during the second mode of operation based on at least the operational parameter.

10. The propulsion system of any preceding claim, wherein the open guide vane structure is downstream of the open propulsor rotor; and/or
wherein the open propulsor rotor is located axially between a forward end of the propulsion system and the turbine engine.

11. The propulsion system of any preceding claim, wherein the rotating structure further comprises a turbine rotor in the turbine section; and/or
wherein the inlet into the flowpath is downstream of the open propulsor rotor, and the open propulsor rotor is configured to propel air into the inlet into the flowpath during the first mode of operation.

12. A propulsion system for an aircraft, comprising:
an open propulsor rotor;
an open guide vane structure next to the open propulsor rotor along an axis, the open guide vane structure comprising a plurality of open guide vanes;
a turbine engine including a flowpath, a compressor section, a combustor section, a turbine section and a rotating structure, the flowpath extending through the compressor section, the combustor section and the turbine section from an inlet into the flowpath to an exhaust from the flowpath, the rotating structure operatively coupled to the open propulsor rotor, and the rotating structure comprising a bladed rotor in the compressor section or in the turbine section;
a vane actuation system configured to adjust pitch of at least one of the plurality of open guide vanes; and
a controller configured to control operation of the vane actuation system during aircraft flight to tailor the pitch of the at least one of the plurality of open guide vanes for a first mode of operation and for a second mode of operation, wherein the turbine engine is configured to drive rotation of the open propulsor rotor about the axis during the first mode of operation, and wherein the open propulsor rotor is configured to windmill about the axis to drive rotation of the rotating structure during the second mode of operation.

13. The propulsion system of claim 12, wherein the controller is configured to control the operation of the vane actuation system to tailor the pitch of the at least one of the plurality of open guide vanes during the second mode of operation based on at least one of an air temperature outside of the propulsion system or an air pressure outside of the propulsion system; and/or
wherein the controller is configured to control the operation of the vane actuation system to tailor the pitch of the at least one of the plurality of open guide vanes during the second mode of operation based on at least one of an aircraft airspeed or an aircraft altitude; and/or
wherein the controller is configured to control the operation of the vane actuation system to tailor the pitch of the at least one of the plurality of open guide vanes during the second mode of operation based on at least one of a temperature in the turbine engine, a pressure in the turbine engine or a rotational speed of the rotating structure; and/or
wherein the bladed rotor is a compressor rotor in the compressor section.

14. A propulsion system for an aircraft, comprising:
an open propulsor rotor comprising a plurality of open propulsor blades, each of the plurality of open propulsor blades projecting into an environment external to the propulsion system;
an airfoil array downstream of the open propulsor rotor, the airfoil array comprising a plurality of airfoils, and each of the plurality of airfoils projecting into the environment external to the propulsion system;
a turbine engine including a flowpath, a compressor section, a combustor section, a turbine section and a rotating structure, the flowpath extending through the compressor section, the combustor section and the turbine section from an inlet into the flowpath to an exhaust from the flowpath, the rotating structure operatively coupled to the open propulsor rotor, and the rotating structure comprising at least one of a compressor rotor in the compressor section or a turbine rotor in the turbine section;
an actuation system configured to adjust pitch of at least one of the plurality of open propulsor blades and/or at least one of the plurality of airfoils; and
a controller configured to control operation of the actuation system during aircraft flight to set the pitch of the at least one of the plurality of open propulsor blades and/or the at least one of the plurality of airfoils for a first mode of operation and for a second mode of operation, wherein the turbine engine is configured to drive rotation of the open propulsor rotor about an axis during the first mode of operation, and wherein the open propulsor rotor is configured to windmill about the axis to drive rotation of the rotating structure during the second mode of operation.

15. The propulsion system of claim 14, further comprising a stationary guide vane structure comprising the airfoil array.
